# EUROPÄISCHE PATENTSCHRIFT

(11) **EP 3 516 251 B1**
(45) Veröffentlichungstag und Bekanntmachung des Hinweises auf die Patenterteilung: **09.09.2020**
(21) Anmeldenummer: 17717620.3
(22) Anmeldetag: 03.03.2017
(51) Int. Cl.: F16D 25/08

(54) **BETÄTIGUNGSSYSTEM UND KUPPLUNGSEINRICHTUNG FÜR EIN KRAFTFAHRZEUG**
ACTUATION SYSTEM AND CLUTCH DEVICE FOR A MOTOR VEHICLE
SYSTÈME D'ACTIONNEMENT ET DISPOSITIF EMBRAYAGE POUR UN VÉHICULE AUTOMOBILE

(30) Priorität: 20.09.2016 DE 102016217974
(43) Veröffentlichungstag der Anmeldung: 31.07.2019
(73) Patentinhaber: Schaeffler Technologies AG & Co. KG, 91074 Herzogenaurach (DE)
(72) Erfinder: HOFSTETTER, Dirk, 76448 Durmersheim (DE)
(86) Internationale Anmeldenummer: PCT/DE2017/100167
(87) Internationale Veröffentlichungsnummer: WO 2018/054412

(56) Entgegenhaltungen:
- WO-A1-2014/026685
- WO-A1-2015/014360
- DE-A1-102013 224 295
- DE-A1-102014 219 246
- DE-A1-102014 222 720

## Beschreibung

Die Erfindung betrifft ein Betätigungssystem für eine Kupplungseinrichtung, zum Beispiel für eine Kupplungseinrichtung eines Hybridmoduls, welches für ein Kraftfahrzeug, wie z.B. einen Pkw, einen Lkw oder ein anderes Nutzfahrzeug vorgesehen ist, und welches an eine Verbrennungskraftmaschine anzukoppeln ist. Des Weiteren betrifft die Erfindung die Kupplungseinrichtung selbst, die das Betätigungssystem aufweist. Siehe WO2014/026685 als Stand der Technik.

Ein Hybridmodul umfasst üblicherweise eine Anschlusseinrichtung zur mechanischen Ankopplung einer Verbrennungskraftmaschine, eine Trennkupplung, mit der Drehmoment von der Verbrennungskraftmaschine auf das Hybridmodul übertragbar ist und mit der das Hybridmodul von der Verbrennungskraftmaschine trennbar ist, eine elektrische Maschine zur Erzeugung eines Antriebsdrehmoments mit einem Rotor, sowie einer Doppelkupplungsvorrichtung, mit der Drehmoment von der elektrischen Maschine und/ oder von der Trennkupplung auf einen Antriebsstrang übertragbar ist. Die Doppelkupplungsvorrichtung umfasst eine erste Teilkupplung und eine zweite Teilkupplung. Jeder angeordneten Kupplung ist jeweils ein Betätigungssystem zugeordnet.

Die elektrische Maschine ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors. Wenn ein Hybridmodul mit einer Doppelkupplung derart in einen Antriebsstrang integriert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden. Eine solche Anordnung führt jedoch gelegentlich zu Bauraumproblemen.

Hinzu kommt, dass ein einer jeweiligen Kupplung zugeordnetes Betätigungssystem ebenfalls einen gewissen Bauraum benötigt, der sich axial und/oder radial erstreckt.

Mittels eines jeweiligen Betätigungssystems wird überwiegend eine axiale Kraft auf die zu betätigenden Kupplung ausgeübt, um diese zu öffnen oder zu schließen. Die Betätigungssysteme bzw. deren Kolben-Zylinder-Einheiten und die Übertragungselemente zur zu betätigenden Kupplung sind dabei jedoch oftmals so ausgelegt, dass von dem Betätigungssystem effektiv nur eine Betätigungskraft in einer Wirkrichtung aufbringbar ist. Dies führt dazu, dass nach Wegnahme oder Verringerung der von Betätigungssystem bewirkten Kraft die Kupplungslamellen der zu betätigenden Kupplung zwar ihre Positionen in Bezug zueinander verändert haben können, jedoch gegebenenfalls nicht die gewünschte vollständige Öffnung oder vollständige Schließung der zu betätigenden Kupplung erreicht ist.
Um auch nach Wegnahme der von Betätigungssystem bewirkten Kraft die Kupplungslamellen in benötigte Relativ-Positionen zueinander zu bewegen, umfassen Ein- bzw. Ausrücksysteme gegebenenfalls Tellerfedern, die eine der Wirkrichtung des Betätigungssystems entgegengesetzte axiale Kraft auf Elemente der zu betätigenden Kupplung bewirken, sodass die Kupplungslamellen vollständig voneinander entfernt bzw. vollständig aneinander angelegt werden. In einigen bisher bekannten Ausführungsformen werden statt Tellerfedern auch Spiraldruckfeder-Pakete angeordnet. Nachteilig bei diesem bekannten Ausführungsformen ist, dass diese Federeinrichtungen weiteren radialen Bauraum beanspruchen und aufgrund ihrer Anordnung im oder am rotierenden Bereich der zu betätigenden Kupplung ebenfalls einer Rotationsbewegung ausgesetzt sein können, wodurch sie einen unerwünschten Anteil am Massenträgheitsmoment der gesamten Kupplungseinrichtung liefern bzw. einem erhöhten Verschleiß ausgesetzt sind. Zudem muss sich der Einbau derartiger Federeinrichtungen oftmals an den vorhandenen Baumverhältnissen orientieren, sodass gegebenenfalls konstruktiv aufwändige Federeinrichtungen eingesetzt werden müssen, um den gewünschten Erfolg zu realisieren.

Der vorliegenden Erfindung liegt die Aufgabe zugrunde, ein Betätigungssystem sowie eine mit dem Betätigungssystem ausgestattete Kupplungseinrichtung für ein Kraftfahrzeug zur Verfügung zu stellen, die mit geringem Bauraum eine lange Lebensdauer aufweisen.

Diese Aufgabe wird durch das erfindungsgemäße Betätigungssystem nach Anspruch 1 sowie durch die erfindungsgemäße Kupplungseinrichtung nach Anspruch 7 gelöst. Vorteilhafte Ausführungsformen des Betätigungssystems sind in den Unteransprüchen 2 bis 6 angegeben. Vorteilhafte Ausgestaltungen der Kupplungseinrichtung sind in den Unteransprüchen 8 und 9 angegeben.
Ergänzend wird eine Antriebsanordnung für ein Kraftfahrzeug mit einer Antriebsmaschine gemäß Anspruch 10 zur Verfügung gestellt, welche die erfindungsgemäße Kupplungseinrichtung aufweist.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.
Die Begriffe radial und axial beziehen sich im Rahmen der vorliegenden Erfindung immer auf die Rotationsachse des Betätigungssystems bzw. der damit ausgestatteten Kupplungseinrichtung.

Die Erfindung betrifft ein Betätigungssystem zur Betätigung einer Kupplung, insbesondere einer Trennkupplung eines Kraftfahrzeuges. Das Betätigungssystem umfasst eine im Wesentlichen ringförmige Kolben-Zylinder-Einheit, deren Kolben zwecks Betätigung der Kupplung im Wesentlichen axial translatorisch entlang einer Wirkrichtung verschiebbar ist, sowie ein ringförmiges Betätigungslager, welches eine rotatorische Relativbewegung zwischen der Kolben-Zylinder-Einheit und der zu betätigenden Kupplung erlaubt. Weiterhin umfasst das Betätigungssystem eine Federeinrichtung zur Realisierung einer im Wesentlichen axial wirkenden Kraft entgegen der Wirkrichtung der Kolben-Zylinder-Einheit, wobei sich die Federeinrichtung an der nicht-rotierenden Seite des Betätigungssystems abstützt.
Die Abstützung der Federeinrichtung an der nicht-rotierenden Seite des Betätigungssystems erfolgt derart, dass keine Relativ-Rotationsbewegung zwischen der Federeinrichtung und der Kolben-Zylinder-Einheit auftritt, wenn einzelne Teile der zu betätigenden Kupplung oder auch die gesamte Kupplung rotieren bzw. rotiert.

Das erfindungsgemäße Betätigungssystem ermöglicht somit die Betätigung einer Kupplung, insbesondere einer Trennkupplung, sowie eine Öffnung bzw. Schließung der Kupplung bei Wegnahme der von der Kolben-Zylinder-Einheit erzeugten Kraft auf die Kupplung aufgrund der Wirkung der Federeinrichtung.
Die Kolben-Zylinder-Einheit kann dabei Bestandteil eines sogenannten Zentralausrückers bzw. Zentraleinrückers sein.
Die Federeinrichtung ist dabei radial sehr bauraumsparend angeordnet. Es ist ein geringerer Verschleiß im Betätigungssystem zu verzeichnen, da keine Relativ-Rotationsbewegung durch die Federeinrichtung übertragen werden muss, sondern die Federeinrichtung im Wesentlichen statisch beansprucht wird. Von der Federeinrichtung ist lediglich die Reibung im Betätigungssystem, zum Beispiel hervorgerufen durch Dichtungsreibung und/oder Rückstaudruck im Leitungssystem, zu überwinden. Das erfindungsgemäße Betätigungssystem eignet sich zum Betätigen von nassen oder trockenen Einfach-, Doppel- bzw. Mehrfachkupplungen.

Vorzugsweise ist die Federeinrichtung durch wenigstens eine Spiraldruckfeder ausgebildet. Diese Spiraldruckfeder ist mit ihrer Längsachse koaxial zur Rotationsachse des Betätigungssystems bzw. der damit ausgestalteten Kupplungseinrichtung angeordnet. Es soll dabei nicht die Anordnung eines Federpakets, vorzugsweise in Reihenschaltung ausgebildet, ausgeschlossen werden.

In einer weiteren vorteilhaften Ausgestaltung des Betätigungssystems ist vorgesehen, dass die Kolben-Zylinder-Einheit in oder an einem Gehäuse angeordnet ist, wobei sich die Federeinrichtung axial am Gehäuse abstützt und auf den Kolben der Kolben-Zylinder-Einheit wirkt. Die Wirkung der Federeinrichtung erfolgt somit in axialer Richtung auf den Kolben entgegen dessen eigener Wirkrichtung auf die Kupplung und bewirkt demzufolge ein Zurückschieben des Kolbens nach dessen Betätigung.

Um eine radial kompakte Ausführung des Betätigungssystems zu gewährleisten weist das Gehäuse einen sich im Wesentlichen axial erstreckenden Abschnitt auf, auf oder an dem koaxial die Federeinrichtung angeordnet ist. Die Einleitung der von der Federeinrichtung erzeugten axialen Kraft in das Gehäuse zwecks axialer Abstützung der Federeinrichtung erfolgt dabei vorzugsweise über einen im Gehäuse angeordneten Sicherungsring.

Insbesondere kann das Betätigungssystem derart ausgeführt sein, dass die axiale Wirkrichtung der Federeinrichtung radial einen geringeren Abstand zur Rotationsachse aufweist als die Wirkrichtung der Kolben-Zylinder-Einheit. Die Rotationsachse ist hierbei die zentrale Rotationsachse, die von der zu betätigenden Kupplung ausgebildet ist. Sie entspricht der Rotationsachse des Betätigungslagers des Betätigungssystems. Dadurch wird trotz Anordnung der Federeinrichtung ein radial nur sehr wenig Bauraum beanspruchenden System zur Verfügung gestellt.

Weiterhin kann zwischen der Federeinrichtung und dem Kolben der Kolben-Zylinder-Einheit ein sich zumindest abschnittsweise radial erstreckendes Druckteil angeordnet seien, mit welchem die von der Federeinrichtung axial erzeugte Kraft auf den Kolben der Kolben-Zylinder-Einheit übertragbar ist. Mit diesem Druckteil ist somit der radiale Versatz zwischen der Wirkrichtung der Federeinheit und der Wirkrichtung der KolbenZylindereinheit überbrückbar, sodass die von der Federeinrichtung aufgebrachte axiale Kraft derart auf den Kolben übertragen werden kann, dass dieser aus einer ausgefahrenen Stellung wieder zurück bewegt werden kann. Derart wird erreicht, dass die vom Betätigungssystem auf eine zu betätigende Kupplung ausgeübte Kraft weggenommen wird und die Kupplung entsprechend geöffnet oder geschlossen werden kann, je nachdem, ob es sich bei der Kupplung um eine normal geöffnete Kupplung oder um eine normal geschlossene Kupplung handelt.

Zur Lösung der Aufgabe wird außerdem eine Kupplungseinrichtung, insbesondere eine Mehrfachkupplungseinrichtung für ein Hybridmodul zum Ankoppeln einer Antriebsmaschine zur Verfügung gestellt, wobei die anzukoppelnde Antriebsmaschine insbesondere eine Verbrennungskraftmaschine sein kann. Die Kupplungseinrichtung umfasst eine Kupplung, mit der Drehmoment von der Antriebsmaschine auf die Kupplungseinrichtung übertragbar ist und mit der die Kupplungseinrichtung von der Antriebsmaschine trennbar ist; und ein erfindungsgemäßes Betätigungssystem zur Betätigung der Kupplung, wobei das Betätigungssystem derart angeordnet und ausgestaltet ist, dass mit seiner Kolben-Zylinder-Einheit eine im Wesentlichen axial wirkende Kraft zur Betätigung der Kupplung auf diese realisierbar ist. Die axial wirkende Kraft, die vom Betätigungssystem ausgeübt wird, wird dazu genutzt, die Kupplung zu öffnen oder zu schließen, je nach Ausführungsform der Kupplung als normal offene Kupplung oder normal geschlossene Kupplung. Ein Drucktopf ist dafür angeordnet und eingerichtet, die von der Kolben-Zylinder-Einheit über das Betätigungslager axial wirkende Kraft auf die Kupplungslamellen der zu betätigenden Kupplung aufzubringen. Er ist demzufolge mechanisch zwischen der Rotationsseite des Betätigungslagers und den Kupplungslamellen der Kupplung angeordnet.

Die Kupplungseinrichtung kann einen Drucktopf zur Übertragung einer vom Betätigungssystem ausgeübten axialen Kraft auf Kupplungslamellen der Kupplung aufweisen, sowie eine weitere Federeinrichtung, mit der eine weitere axiale Kraft auf den Drucktopf entgegen der Wirkrichtung der Kolben-Zylinder-Einheit des Betätigungssystems aufbringbar ist. Die erstgenannte Federeinrichtung sowie die weitere Federeinrichtung sind damit parallel geschaltet, wobei die von den beiden Federeinrichtungen aufgebrachten Kräfte entgegen der Wirkrichtung der Kolben-Zylinder-Einheit auf diese wirken, um eine von der Kolben-Zylinder-Einheit in der Kupplung realisierte axiale Verschiebung der Kupplungslamellen rückgängig machen zu können. Der Vorteil der Anordnung der weiteren Federeinrichtung ist, dass damit Kupplungslamellen der zu betätigenden Kupplung aktiv getrennt werden und die erstgenannte Federeinrichtung, die sich am Gehäuse abstützt, unterstützt wird. Dies bewirkt ein maximales Lüftspiel an den Belags- und Stahllamellen der Kupplung. Die weitere Federeinrichtung muss nur sehr geringe Kräfte erzeugen, da die erstgenannte Federeinrichtung derart ausgelegt werden kann, dass mit ihr die relativ hohe Dichtungsreibung überwunden wird. Entsprechend kann die weitere Federeinrichtung sehr kompakt ausgeführt werden.

In der Ausgestaltung der Kupplungseinrichtung mit der weiteren Federeinrichtung ist vorteilhafterweise vorgesehen, dass die weitere Federeinrichtung wenigstens eine Tellerfeder aufweist, welche sich mit ihrem radial äußeren Rand an einem Gegendruckelement der zu betätigenden Kupplung abstützt. Der radial innere Rand der Tellerfeder greift am Drucktopf an. Die weitere Federeinrichtung ist daher derart angeordnet, dass sie bei einer Rotation der zu betätigenden Kupplung ebenfalls mit rotiert. Das Gegendruckelement dient der Aufbringung der Gegenkraft auf die Kupplungslamellen gegen die mittels der Kolben-Zylinder-Einheit zwecks Zusammenpressen der Lamellen aufgebrachten axialen Kraft.

Ergänzend wird eine Antriebsanordnung für ein Kraftfahrzeug mit einer Antriebsmaschine zur Verfügung gestellt, welche eine erfindungsgemäße Kupplungseinrichtung sowie ein Fahrzeuggetriebe aufweist, wobei die Kupplungseinrichtung mit der Antriebsmaschine und dem Fahrzeuggetriebe mechanisch verbunden ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigte Ausführungsbeispiele nicht auf die dargestellten Maße eingeschränkt sind.

Es zeigt
- Figur 1: eine erfindungsgemäße Kupplungseinrichtung einer ersten Ausführungsform in einem Teilschnitt, und
- Figur 2: eine erfindungsgemäße Kupplungseinrichtung einer zweiten Ausführungsform in einem Teilschnitt.

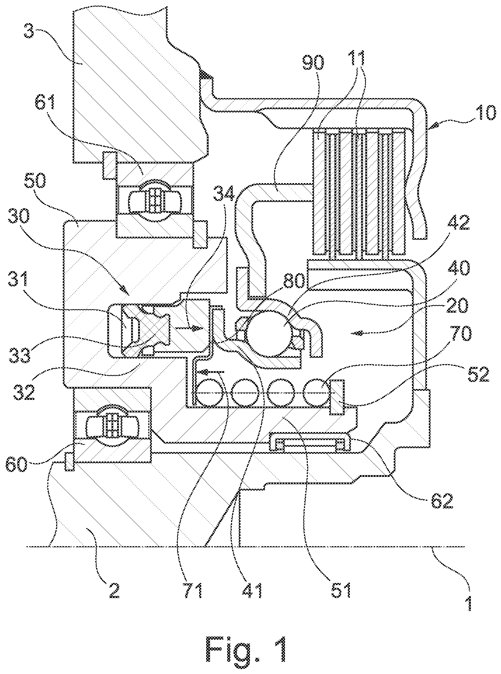

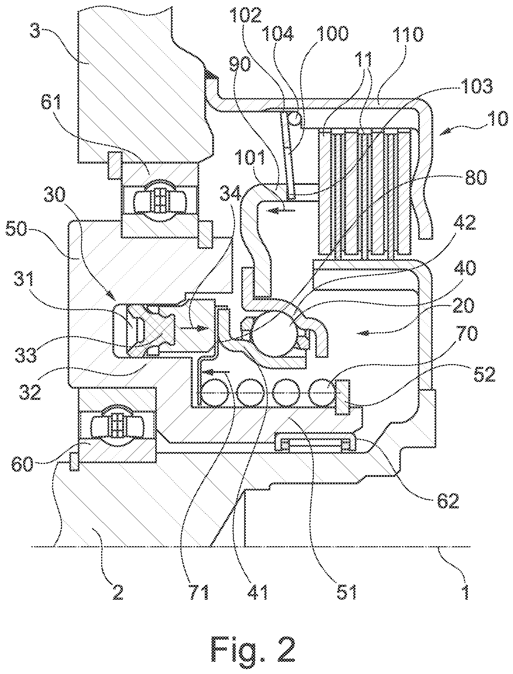

In Figur 1 ist eine erfindungsgemäße Kupplungseinrichtung einer einfacheren Bauart dargestellt, und in Figur 2 ist eine erfindungsgemäße Kupplungseinrichtung mit einer weiteren Federeinrichtung ersichtlich. D.h., dass die in Figur 1 gezeigte Kupplungseinrichtung lediglich mit einer weiteren Federeinrichtung ergänzt in Figur 2 dargestellt ist. Zunächst wird der allgemeine Aufbau der erfindungsgemäßen Kupplungseinrichtung und des erfindungsgemäßen Betätigungssystems anhand beider Figuren erläutert. Auf einer gemeinsamen Rotationsachse 1 sind das erfindungsgemäße Betätigungssystem 20 und die dadurch betätigte Kupplung 10 angeordnet. Das Betätigungssystem 20 umfasst eine Kolben-Zylinder-Einheit 30, deren Kolben 31 in einem Zylinder 32, der von einem Gehäuse 50 ausgebildet ist, im Wesentlichen parallel zur Rotationsachse 1 verschiebbar ist. Damit kann der Kolben 31 in einer Wirkrichtung 34 über ein Betätigungslager 40 und einen daran angeschlossenen Drucktopf 90 eine axiale Kraft auf die hier dargestellte, normal geöffnete Kupplung 10 aufbringen, sodass deren Kupplungslamellen 11 aneinander gedrückt werden und Drehmoment mittels der Kupplung 10 übertragen werden kann. Gegenüber dem den Zylinder 32 ausbildenden Gehäuse 50 ist der Kolben 31 der Kolben-Zylinder-Einheit 30 mit einer Dichtung 33 abgedichtet.
Es ist ersichtlich, dass von der Kolben-Zylinder-Einheit 30 eine Kraft lediglich effektiv in der Wirkrichtung 34 aufgebracht werden kann, die, wie beschrieben, bewirkt, dass die Kupplung 10 geschlossen wird.

Um bei Nicht-Betätigung des Betätigungssystems 20 wiederum eine Öffnung der Kupplung 10 zu erreichen müssen die Kupplungslamellen 11 wieder ausreichend voneinander entfernt werden, ohne dass es zu Schleppverlusten kommt.
Zu diesem Zweck umfasst das Betätigungssystem 20 eine Federeinrichtung 70, welche koaxial zur Rotationsachse 1 und auf einem sich axial erstreckenden Abschnitt 51 des Gehäuses 50 angeordnet ist. Diese Federeinrichtung 70 stützt sich einseitig an einem Sicherungsring 52 ab, der sich wiederum an dem sich axial erstreckenden Abschnitt 51 des Gehäuses 50 abstützt. Andererseits drückt die Federeinrichtung 70 gegen ein Druckteil 80, welches die von der Federeinrichtung 70 bewirkte axial wirkende Kraft 71 auf den Kolben 31 der Kolben-Zylinder-Einheit 30 überträgt. Derart wird der Kolben 31 aufgrund der von der Federeinrichtung 70 bewirkten axial wirkenden Kraft 71 wieder in Richtung seiner Ausgangsposition zurückgeschoben, so dass die Kupplungslamellen 11 aus ihrem gegenseitigen Reibschluss herausgebracht werden können.
Es ist ersichtlich, dass das Druckteil 80 einen radialen Versatz der Wirkungslinie der axial wirkenden Kraft 71 der Federeinrichtung 70 in Bezug zur Wirkrichtung 34 der Kolben-Zylinder-Einheit 30 kompensiert.
Weiterhin ist erkennbar, dass die Federeinrichtung 70 ausschließlich an der nicht-rotierenden Seite 41 des Betätigungslagers 40 angeordnet ist, sodass die Federeinrichtung 70 keiner rotatorischen Bewegung ausgesetzt ist. Die rotatorische Bewegung des Betätigungslagers 70 wird lediglich durch die rotierende Seite 42 des Betätigungslagers 40 ausgeführt, wenn die Kupplung 10 geschlossen ist.
Insgesamt lässt sich somit in radial sehr bauraumsparender Weise die Übertragung eines Drehmomentes von einer Antriebswelle 2 über die Kupplung 10 auf ein angeschlossenes weiteres Aggregat 3, welches zum Beispiel ein Getriebe sein kann, ermöglichen. Dabei ist gewährleistet, dass die Kupplung 10 bei Nicht-Betätigung des Betätigungssystems 20 geöffnet ist bzw. die Kupplungslamellen 11 der Kupplung 10 nicht miteinander im Eingriff sind.
Das Gehäuse 50 stützt dabei über ein erstes Rotationslager 60 und ein Nadellager 62 die Antriebswelle 2 ab, und über ein zweites Rotationslager 61 stützt das Gehäuse das weitere Aggregat 3 ab.

In der in Figur 2 ersichtlichen ergänzten Ausführungsform der erfindungsgemäßen Kupplungseinrichtung weist diese eine weitere Federeinrichtung 100 in Form einer Tellerfeder auf. Diese Tellerfeder bzw. weitere Federeinrichtung 100 stützt sich mit ihrem radial äußeren Rand 102 an einem Gegendruckelement 110 der Kupplung 10 ab, und mit ihrem radial inneren Rand 103 stützt sich die weitere Federeinrichtung 100 am Drucktopf 90 ab. Dabei ist die als Tellerfeder ausgestaltete weitere Federeinrichtung 100 an einem Ring 104 am Gegendruckelement 110 gelagert. Durch die weitere Federeinrichtung 100 wird eine weitere axiale Kraft 101 erzeugt, die ebenfalls der Wirkrichtung 34 der Kolben-Zylinder-Einheit 30 entgegenwirkt und damit die Federeinrichtung 70 darin unterstützt, den Kolben 31 der Kolben-Zimmer-Einheit 30 in seine Ausgangsposition zurück zu bewegen und den Abstand der Kupplungslamellen 11 zueinander zu vergrößern.

Mit der Erfindung werden somit ein Betätigungssystem und eine damit ausgestattete Kupplungseinrichtung zur Verfügung gestellt, die einen geringen radialen Bauraum mit einer hohen Lebensdauer verbinden.

### Bezugszeichenliste

- 1: Rotationsachse
- 2: Antriebswelle
- 3: weiteres Aggregat
- 10: Kupplung
- 11: Kupplungslamellen
- 20: Betätigungssystem
- 30: Kolben-Zylinder-Einheit
- 31: Kolben
- 32: Zylinder
- 33: Dichtung
- 34: Wirkrichtung
- 40: Betätigungslager
- 41: nicht-rotierende Seite
- 42: rotierende Seite
- 50: Gehäuse
- 51: axial erstreckender Abschnitt
- 52: Sicherungsring
- 60: erstes Rotationslager
- 61: zweites Rotationslager
- 62: Nadellager
- 70: Federeinrichtung
- 71: axial wirkende Kraft
- 80: Druckteil
- 90: Drucktopf
- 100: weitere Federeinrichtung
- 101: weitere axiale Kraft
- 102: radial äußerer Rand
- 103: radial innerer Rand
- 104: Ring
- 110: Gegendruckelement

## Patentansprüche

1. Kupplungseinrichtung, insbesondere Mehrfachkupplungseinrichtung für ein Hybridmodul zum Ankoppeln einer Antriebsmaschine, insbesondere einer Verbrennungskraftmaschine, umfassend eine Kupplung (10), mit der Drehmoment von der Antriebsmaschine auf die Kupplungseinrichtung übertragbar ist und mit der die Kupplungseinrichtung von der Antriebsmaschine trennbar ist; und ein Betätigungssystem (20) zur Betätigung der Kupplung (10), umfassend eine im Wesentlichen ringförmige Kolben-Zylinder-Einheit (30), deren Kolben (31) zwecks Betätigung der Kupplung (10) im Wesentlichen axial translatorisch entlang einer Wirkrichtung (34) verschiebbar ist, sowie ein ringförmiges Betätigungslager (40), welches eine rotatorische Relativbewegung zwischen der Kolben-Zylinder-Einheit (30) und der zu betätigenden Kupplung (10) erlaubt, und weiterhin umfassend eine Federeinrichtung (70) zur Realisierung einer im Wesentlichen axial wirkenden Kraft (71) entgegen der Wirkrichtung (34) der Kolben-Zylinder-Einheit (30), wobei sich die Federeinrichtung 70 an der nicht-rotierenden Seite (41) des Betätigungssystems (20) abstützt, wobei das Betätigungssystem (20) derart angeordnet und ausgestaltet ist, dass mit seiner Kolben-Zylinder-Einheit (30) eine im Wesentlichen axial wirkende Kraft zur Betätigung der Kupplung (10) auf diese realisierbar ist, wobei diese einen Drucktopf (90) zur Übertragung einer vom Betätigungssystem (20) ausgeübten axialen Kraft auf Kupplungslamellen (11) der Kupplung (10)aufweist, sowie eine weitere Federeinrichtung (100), mit der eine weitere axiale Kraft (101) auf den Drucktopf (90) entgegen der Wirkrichtung (34) der Kolben-Zylinder-Einheit (30) des Betätigungssystems (20) aufbringbar ist, **dadurch gekennzeichnet, dass** die weitere Federeinrichtung (100) wenigstens eine Tellerfeder aufweist, welche sich mit ihrem radial äußeren Rand (102) an einem Gegendruckelement (110) der zu betätigenden Kupplung (10) abstützt.

2. Kupplungseinrichtung nach Anspruch 1, **dadurch gekennzeichnet, dass** die Federeinrichtung (70) des Betätigungssystems (20) wenigstens eine Spiraldruckfeder umfasst.

3. Kupplungssystem nach einem der vorhergehenden Ansprüche, **dadurch gekennzeichnet, dass** Kolben-Zylinder-Einheit (30) des Betätigungssystems (20) in oder an einem Gehäuse (50) angeordnet ist, wobei sich die Federeinrichtung (70) axial am Gehäuse (50) abstützt und auf den Kolben (31) der Kolben-Zylinder-Einheit (30) wirkt.

4. Kupplungssystem nach Anspruch 3, **dadurch gekennzeichnet, dass** das Gehäuse (50) einen im Wesentlichen axial sich erstreckenden Abschnitt (51) aufweist, auf oder an dem koaxial die Federeinrichtung (70) angeordnet ist.

5. Kupplungssytem nach einem der vorhergehenden Ansprüche, **dadurch gekennzeichnet, dass** die axiale Wirkrichtung (71) der Federeinrichtung (70) radial einen geringeren Abstand zur Rotationsachse (1) aufweist als die Wirkrichtung (34) der Kolben-Zylinder-Einheit (30).

6. Kupplungssystem nach Anspruch 5, **dadurch gekennzeichnet, dass** zwischen der Federeinrichtung (70) und dem Kolben der Kolben-Zylinder-Einheit (30) ein sich zumindest abschnittsweise radial erstreckendes Druckteil (80) angeordnet ist, mit welchem die von der Federeinrichtung (70) axial erzeugte Kraft (71) auf den Kolben (31) der Kolben-Zylinder-Einheit (30) übertragbar ist.

7. Antriebsanordnung für ein Kraftfahrzeug mit einer Antriebsmaschine, umfassend eine Kupplungseinrichtung nach einem der Ansprüche 1-6,
sowie mit einem Fahrzeuggetriebe, wobei die Kupplungseinrichtung mit der Antriebsmaschine und dem Fahrzeuggetriebe mechanisch verbunden ist.

## Claims

1. A clutch device, in particular a multi-clutch device for a hybrid module for coupling a main engine, in particular an internal combustion engine, comprising a clutch (10) with which torque can be transmitted from the main engine to the clutch device and with which the clutch device can be separated from the main engine, and an actuation system (20) for actuating the clutch (10), comprising a substantially annular piston/cylinder unit (30), the piston (31) of which being substantially axially translationally displaceable in a direction of action (34) for actuating the clutch (10), as well as an annular actuating bearing (40), which allows a rotatory relative movement between the piston/cylinder unit (30) and the clutch (10) to be actuated, and further comprising a spring device (70) for realising a substantially axially acting force (71) against the direction of action (34) of the piston/cylinder unit (30), the spring device (70) being supported on the nonrotating side (41) of the actuation system (20), the actuation system (20) being arranged and designed such that, with its piston/cylinder unit (30), a substantially axially acting force can be realised thereon for actuating the clutch (10), the latter comprising a pressure pot (90) for transmitting an axial force exerted by the actuation system (20) onto clutch plates (11) of the clutch (10), as well as a further spring device (100) with which a further axial force (101) can be exerted on the pressure pot (90) against the direction of action (34) of the piston/cylinder unit (30) of the actuation system (20), **characterised in that** the further spring device (100) has at least one disc spring which is supported with its radially outer edge (102) on a counter-pressure element (110) of the clutch (10) to be actuated.

2. The clutch device according to claim 1, **characterised in that** the spring device (70) of the actuation system (20) comprises at least one compression coil spring.

3. The clutch system according to any one of the preceding claims, **characterised in that** the piston-cylinder unit (30) of the actuation system (20) is arranged in or on a housing (50), the spring device (70) being axially supported on the housing (50) and acting on the piston (31) of the piston/cylinder unit (30).

4. The clutch system according to claim 3, **characterised in that** the housing (50) has a section (51) extending substantially axially, on or in which the spring device (70) is coaxially arranged.

5. The clutch system according to any one of the preceding claims, **characterised in that** the axial direction of action (71) of the spring device (70) has a smaller radial distance from the axis of rotation (1) than the direction of action (34) of the piston/cylinder unit (30).

6. The clutch system according to claim 5, **characterised in that** a pressure part (80) extending radially at least in part is arranged between the spring device (70) and the piston of the piston/cylinder unit (30), with which the force (71) axially generated by the spring device (70) can be transmitted to the piston (31) of the piston/cylinder unit (30).

7. A drive arrangement for a motor vehicle having a main engine, comprising a clutch device according to any one of claims 1 to 6, and having a vehicle transmission, wherein the clutch device is mechanically connected to the main engine and the vehicle transmission.

## Revendications

1. Dispositif embrayage, en particulier dispositif embrayage multiple pour un module hybride destiné à l'accouplement d'un moteur d'entraînement, en particulier un moteur à combustion interne, comprenant un embrayage (10) avec lequel le couple peut être transmis du moteur d'entraînement au dispositif embrayage et avec lequel le dispositif embrayage peut être séparé du moteur d'entraînement ; et un système d'actionnement (20) pour actionner l'embrayage (10), comprenant une unité piston-cylindre (30) essentiellement annulaire, dont le piston (31) pour l'actionnement de l'embrayage (10) est essentiellement déplaçable en sens axial en translation le long d'une direction active (34), ainsi qu'un palier d'actionnement annulaire (40) qui permet un mouvement relatif de rotation entre l'unité piston-cylindre (30) et l'embrayage (10) à actionner et comprenant en outre un dispositif à ressort (70) pour réaliser une force agissant essentiellement en sens axial (71) contre la direction active (34) de l'unité piston-cylindre (30), le dispositif à ressort (70) étant supporté sur le côté non rotatif (41) du système d'actionnement (20), le système d'actionnement (20) étant agencé et conçu de manière qu'une force agissant essentiellement axialement pour actionner l'embrayage (10) peut être réalisée avec son unité piston-cylindre (30), celui-ci présentant un pot à pression (90) pour transmettre une force axiale exercée par le système d'actionnement (20) aux disques d'embrayage (11) de l'embrayage (10), ainsi qu'un autre dispositif à ressort (100) avec lequel une autre force axiale (101) peut être exercée sur le pot à pression (90) dans le sens contraire à la direction active (34) de l'unité piston-cylindre (30) du système d'actionnement (20), **caractérisé en ce que** l'autre dispositif à ressort (100) comporte au moins un ressort à lames qui, avec son bord radialement extérieur (102), est supporté sur un élément de contre-pression (110) de l'embrayage (10) à actionner.

2. Dispositif embrayage selon la revendication 1, **caractérisé en ce que** le dispositif à ressort (70) du système d'actionnement (20) comprend au moins un ressort de compression hélicoïdal.

3. Système d'embrayage selon l'une des revendications précédentes, **caractérisé en ce que** l'unité piston-cylindre (30) du système d'actionnement (20) est disposée dans ou sur un boîtier (50), le dispositif à ressort (70) étant supporté axialement sur le boîtier (50) et agissant sur le piston (31) de l'unité piston-cylindre (30).

4. Système d'embrayage selon la revendication 3, **caractérisé en ce que** le boîtier (50) comporte une partie s'étendant sensiblement axialement (51) sur ou au niveau de laquelle le dispositif à ressort (70) est disposé coaxialement.

5. Système d'embrayage selon l'une des revendications précédentes, **caractérisé en ce que** la direction active axiale (71) du dispositif à ressort (70) présente une distance radiale par rapport à l'axe de rotation (1) plus petite que la direction active (34) de l'unité piston-cylindre (30).

6. Système d'embrayage selon la revendication 5, **caractérisé en ce qu'**entre le dispositif à ressort (70) et le piston de l'unité piston-cylindre (30) est disposée une partie de pression (80) s'étendant au moins partiellement radialement avec laquelle la force (71) produite axialement par le dispositif à ressort (70) peut être transmise sur le piston (31) de l'unité piston-cylindre (30).

7. Agencement d'entraînement pour un véhicule automobile comprenant un moteur d'entraînement, comprenant un dispositif embrayage selon l'une des revendications 1 à 6, et une transmission de véhicule, le dispositif embrayage étant relié mécaniquement au moteur d'entraînement et à la transmission du véhicule.
